# EUROPEAN PATENT SPECIFICATION

(11) **EP 3 246 813 B1**
(45) Date of publication and mention of the grant of the patent: **20.01.2021**
(21) Application number: 17172063.4
(22) Date of filing: 19.05.2017
(51) Int. Cl.: G06F 3/12, H04N 1/00, H04N 1/44

(54) **PROCESSING APPARATUS AND CONTROL PROGRAM**
VERARBEITUNGSVORRICHTUNG UND STEUERUNGSPROGRAMM
APPAREIL DE TRAITEMENT ET PROGRAMME DE COMMANDE

(30) Priority: 19.05.2016 JP 2016100169
(43) Date of publication of application: 22.11.2017
(73) Proprietor: Seiko Epson Corporation, Tokyo 160-8801 (JP)
(72) Inventor: OHASHI, Ayako, Suwa-shi, Nagano 392-8502 (JP)
(74) Representative: Miller Sturt Kenyon

(56) References cited:
- JP-A- 2009 267 675
- US-A1- 2012 105 900

## Description

### BACKGROUND

### 1. Technical Field

The present invention relates to a processing apparatus for processing a file that requires authentication and a program for controlling the processing apparatus.

### 2. Related Art

Password-protected files that require entering a password for previewing and printing are known. JP-A-2013-099951 describes a printing apparatus capable of performing authentication-required magnetic ink character recognition (MICR) printing that requires authentication and performing normal MICR printing that does not require authentication. In this printing apparatus, in order to print authentication-required MICR print data as collectively as possible, the print order of the authentication-required MICR print data and the normal MICR print data can be changed. However, the password for the authentication-required MICR print data is entered when the print process for the authentication-required MICR print data is started.

As described above, the known techniques have some inconvenient aspects in processing password-protected authentication-required files. Specifically, in the known techniques, a user is requested to enter a password when a process for an authentication-required file is started. For example, after a plurality of files including an authentication-required file have been selected as process targets, processing of the authentication-required file cannot be started until the user has entered a password, which is inconvenient.

US 2012/105900 discloses an image forming apparatus that performs a direct printing function. A selecting section selects at least two files from a plurality of files stored in at least one of an internal storage medium and an external storage medium. A human interface receives passwords from a user. A password determining section determines whether the selected files are protected by passwords. A file extracting section extracts the selected files from an internal storage medium or external storage medium. A password verifying section determines whether passwords contained in the selected files and the passwords inputted through the human interface coincide. A printer prints the selected files. A printing controller controls the printer, causing the printer to print at least one of selected files if the password verifying section has determined that the password contained in the at least one selected file and the password inputted by the user coincide.

JP 2009-267675 discloses a storage device of a multifunction machine containing passworded files of image data, and a job execution unit that executes jobs on a plurality of files given the same password together under the control of a job execution control unit. An input reception unit can receive a plurality of passwords together, and the job execution unit performs jobs even on files corresponding to the plurality of passwords together.

### SUMMARY

An advantage of some aspects of the invention is that the convenience of processing an authentication-required file is increased.

A processing apparatus according to an aspect of the invention is defined in claim 1.

According to the above-described configuration, for example, when a user instructs the processing apparatus to perform processes on a plurality of files including an authentication-required file and a no authentication-required file, the user is requested to enter authentication information for the authentication-required file by using the processing apparatus after selecting the authentication-required file and before both processes for the authentication-required file and the no authentication-required file are performed by the processing apparatus. Consequently, for example, if the authentication-required file is processed last among the target files, according to this aspect of the invention, the user is not required to wait to input authentication information until the process for the authentication-required file is started, and the user can immediately enter the authentication information when the authentication-required file is selected as a process target. Accordingly, the processing apparatus according to this aspect of the invention can increase the convenience of processing authentication-required files.

A control program according to another aspect of the invention is defined in claim 5.

### BRIEF DESCRIPTION OF THE DRAWINGS

Embodiments of the invention will now be described by way of example only with reference to the accompanying drawings, wherein like numbers reference like elements.
Fig. 1 is a block diagram illustrating a configuration of a printer.
Fig. 2 is a screen layout.
Fig. 3 is a screen layout.
Fig. 4 is a screen layout.
Fig. 5 is a flowchart illustrating a user interface process of a print function.
Fig. 6 is a flowchart illustrating the user interface process of the print function.
Fig. 7 is a flowchart illustrating the user interface process of the print function.

### DESCRIPTION OF EXEMPLARY EMBODIMENTS

Hereinafter, embodiments will be described with reference to the attached drawings. The second embodiment relates to the claimed invention, while the other embodiments are included only as background to the invention. In the drawings, the same reference numerals are given to corresponding components, and overlapping descriptions will be omitted.

### 1. First embodiment

### 1-1. Printer configuration

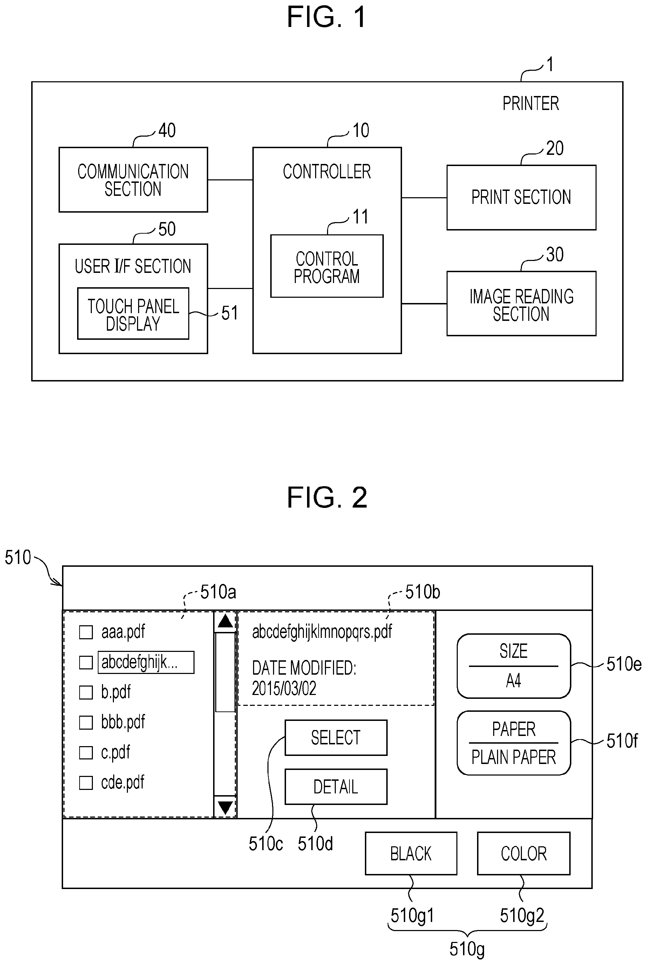

Fig. 1 is a block diagram illustrating a configuration of a printer 1, which is an example processing apparatus according to the embodiment of the present invention. The printer 1 includes a controller 10, a print section 20, an image reading section 30, a communication section 40, and a user interface (I/F) section 50.

The print section 20 includes an actuator, a sensor, a drive circuit, and mechanical components for performing printing on a print medium such as photo paper, plain paper, and an OHP sheet by a known printing method such as an ink jet method or an electrophotographic method. The image reading section 30 includes a known color image sensor that emits light onto an original document that is placed on a platen and splits the light reflected by the original document into red, green, and blue (RGB) components to produce scan image data, and includes an actuator, a drive circuit, and mechanical components for transporting the original.

The communication section 40 includes various communication interfaces for communicating with an external device by wired or wireless communication. The communication section 40 also includes an interface for communicating with various removable storage devices attached to the printer 1. The user I/F section 50 includes a touch panel display (hereinafter, simply referred to as a touch panel) 51 and a character input section that includes a numeric keypad (not illustrated). The touch panel 51 includes a display panel that displays various kinds of information under the control of the controller 10, and a touch detection panel that is layered on the display panel. The touch panel 51 detects a touch operation made with a pointing object such as a finger by using a known method such as a capacitance method, a resistance film method, or an optical method. The touch panel 51 outputs the touch information concerning the touch operation to the controller 10, for example, coordinates of a touch-start position and a touch-end position.

The controller 10 includes, for example, a processor such as a central processing unit (CPU) (not illustrated), a read-only memory (ROM), a random access memory (RAM), and a nonvolatile memory. The CPU can execute a control program 11 that is stored in a ROM or a nonvolatile memory by using the RAM or the nonvolatile memory. The processor may consist of one or a plurality of CPUs, one or a plurality of application-specific integrated circuits (ASICs), or may be formed by a combination of these components. The control program 11 causes the printer 1 to control corresponding components in the printer 1 to execute a function of displaying various kinds of information on the touch panel 51, detecting an operation (for example, a tapping, swiping, pinch-in, or pinch-out operation) on the touch panel 51 based on touch information acquired from the touch panel 51, and performing processes corresponding to the operation, and to control corresponding components in the printer 1 to execute processes based on control information transmitted from an external device via the communication section 40. Specifically, the control program 11 includes a function of receiving a print target selection with respect to a plurality of files that are stored in a removable storage device, which stores various files such as encrypted files (files that correspond to "authentication-required files") and unencrypted files (files that correspond to "no authentication-required files"), and executing a preview process and a print process.

The encrypted files according to this embodiment require password authentication when a user requests a preview process or a print process. In this embodiment, the print process corresponds to the "process". If an entered password is determined to be valid by authentication, the encrypted portion of the encrypted file can be decrypted in accordance with the password, and the decrypted file can be subjected to the preview process or the print process. The encrypted file may be any type of file, for example, a portable document format (PDF) file, a spreadsheet file, or another type of document file. Alternatively, the encrypted file may be a compressed file that requests a password when the file is decompressed.

### 1-2. User interface process of the print function

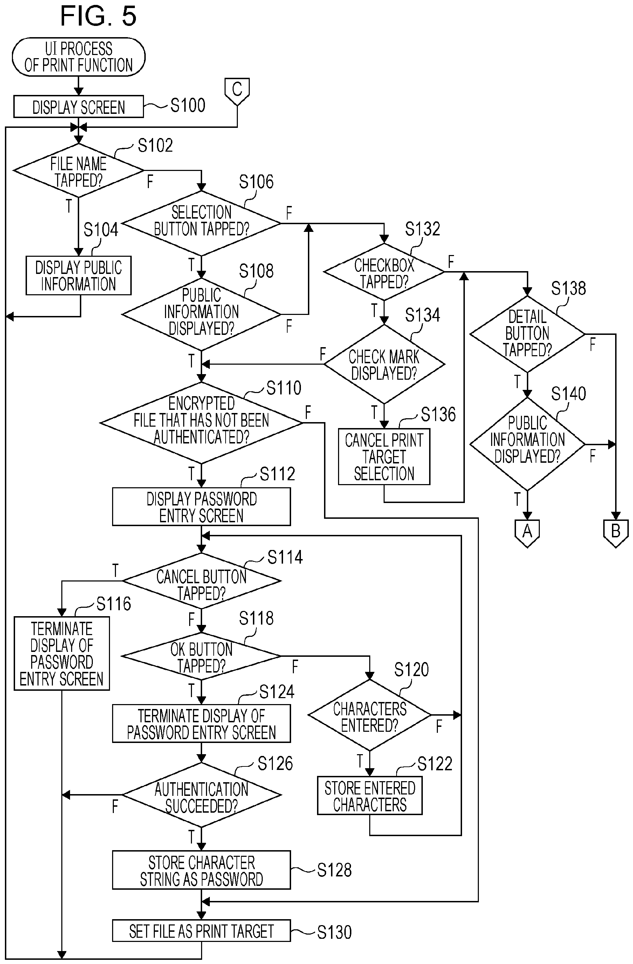

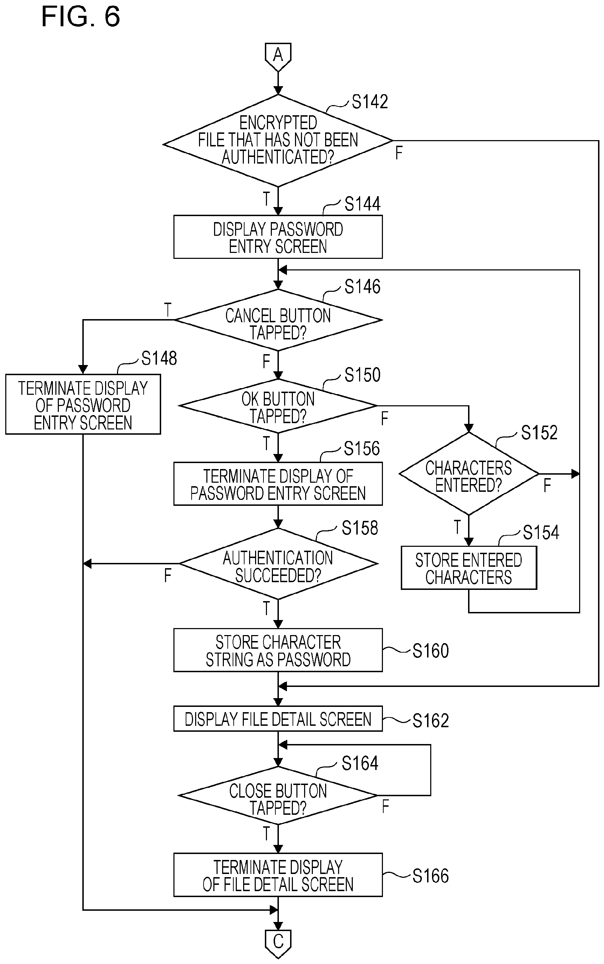

Fig. 2 is a screen layout displayed on the touch panel 51 when the print function is selected. Fig. 5 to Fig. 7 are flowcharts illustrating a user interface (Ul) process of the print function. For example, when a user selects, via the touch panel 51, a removable storage device print function for printing a file stored on a removable storage device (not illustrated) that is connected to the communication section 40, the UI process illustrated in Fig. 5 to Fig. 7 starts. First, the controller 10 causes the touch panel 51 to display a screen 510 illustrated in Fig. 2 (step S100). The screen 510 includes a file list section 510a, a file public information display section 510b, a selection button 510c, a detail button 510d, a size button 510e, a paper button 510f, and a print button 510g. In the file list section 510a, a file name list of the files that are stored in a folder on the removable storage device and checkboxes that correspond to the respective file names of the files are displayed. In the file list section 510a, a scroll bar for scrolling the file names and the checkboxes may be displayed.

In the file public information display section 510b, when the file name of a file in the file list section 510a has been tapped by a user, the public information of the file is displayed. The public information is attribute information of each file that is publicly accessible regardless of being encrypted or not encrypted. For example, the public information includes the full path (the storage location and the file name) of the file and the last modified date and time.

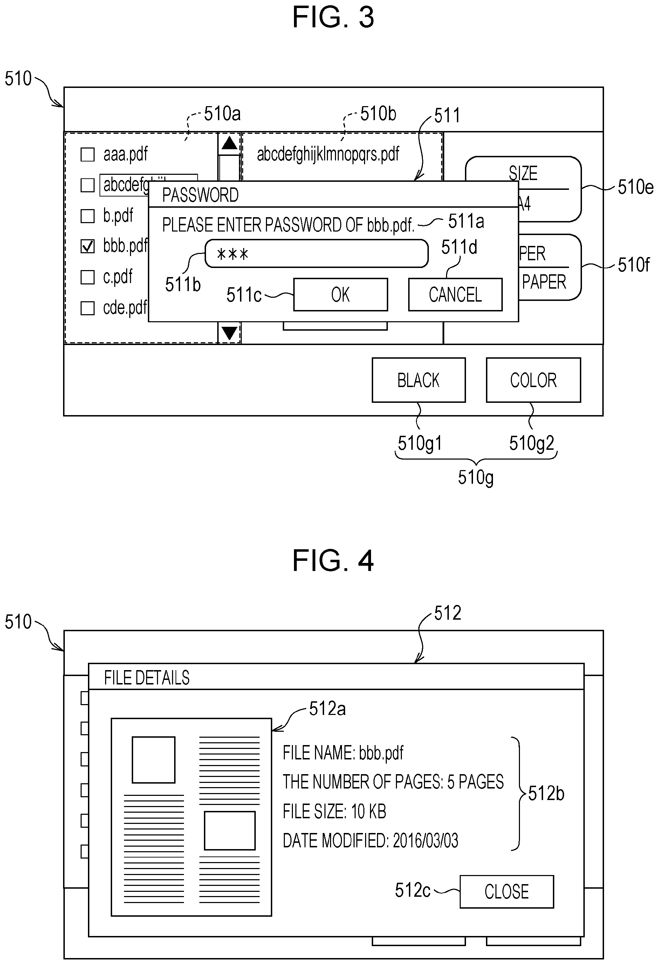

The selection button 510c is used to select a file to be printed. The detail button 510d is used to display a file detail screen 512 (Fig. 4), which will be described below. The file detail screen 512 displays a preview image 512a of a file. The size button 510e is used to set the size of printing paper. The paper button 510f is used to set the type of printing paper. The print button 510g is used to issue an instruction for starting a print process and includes a black and white print button 510g1 and a color print button 510g2. The black and white print button 510g1 is used to print in black and white a file that is selected as a print target. The color print button 510g2 is used to print in color a file that is selected as a print target.

Returning to the description of the flowchart, after step S100, while the above-described screen 510 is displayed, the controller 10 determines whether any one of the file names displayed in the file list section 510a has been tapped (step S102). If the controller 10 determines that a file name has been tapped, the public information is displayed in the file public information display section 510b (step S104). In step S104, the controller 10 highlights the file name of the file that has been tapped in the file list section 510a such that the user can readily see that the public information of the file is being displayed. In Fig. 2, the file name of the second file in the file list section 510a is highlighted to indicate that the public information of the file is being displayed.

In step S102, if the controller 10 determines that no file name has been tapped, the controller 10 determines whether the selection button 510c has been tapped (step S106). If the user taps the selection button 510c while the public information of the file, which has been tapped in the file list section 510a, is being displayed in the file public information display section 510b (public information display state (S104)), the user can select the file in the public information display state as a print target (this function is performed by the operations in step S106 to step S130). If the user taps the detail button 510d while the public information is being displayed, the user can display the file detail screen 512 of the file in the public information display state (this function is performed by the operations in step S138 to step S162).

In step S106, if the controller 10 determines that the selection button 510c has been tapped, the controller 10 determines whether the file public information display section 510b is in the public information display state (step S108). If the file public information display section 510b is not in the public information display state, that is, if no file is selected as a public information display target, the determination in step S108 is performed to disable the selection button 510c. In step S108, if the controller 10 determines that the file public information display section 510b is not in the public information display state, the process proceeds to step S132. In step S108, if the controller 10 determines that the file public information display section 510b is in the public information display state, the controller 10 determines whether the file in the public information display state, that is, the file that is a candidate to be selected as a print target, is an encrypted file that has not been authenticated (step S110). In this embodiment, the encrypted file that has not been authenticated is an encrypted file for which a valid password has not been entered, that is, an encrypted file that has not been associated with a valid password and has not been stored in the RAM. In step S110, if the controller 10 determines that the file is an encrypted file that has not been authenticated, the controller 10 causes the screen 510 to display a password entry screen 511 as illustrated in Fig. 3 (step S112).

As illustrated in Fig. 3, the password entry screen 511 includes a file name presenting section 511a that presents the name of a file whose password is to be entered, an entry box 511b into which the password is to be entered, an OK button 511c that is used to complete the password entry, and a cancel button 511d that is used to cancel the password entry and terminates the display of the password entry screen 511. While the password entry screen 511 is displayed, the user can enter a password by operating keys (not illustrated), for example, keys on a numeric keypad that are associated with alphabetical characters.

After the password entry screen 511 has been displayed in step S112, the controller 10 determines whether the cancel button 511d has been tapped (step S114). If the controller 10 determines that the cancel button 511d has been tapped, the controller 10 terminates the dialog of the password entry screen 511 (step S116). If the entered characters have been stored temporarily in step S122, which will be described below, in step S116, the controller 10 discards the entered characters. In step S116, after the dialog of the password entry screen 511 has been terminated, the screen 510 is displayed in an active state.

In step S114, if the controller 10 determines that the cancel button 511d has not been tapped, the controller 10 determines whether the OK button 511c has been tapped (step S118). In step S118, if the controller 10 determines that the OK button 511c has not been tapped, the controller 10 determines whether character entry has been performed by using a numeric keypad (not illustrated) (step S120). In step S120, if the controller 10 determines that no character entry has been performed, the process returns to step S114. In step S120, if the controller 10 determines that character entry has been performed, the controller 10 stores the entered characters in the RAM (step S122), and the process returns to step S114.

In step S118, if the controller 10 determines that the OK button 511c has been tapped, the controller 10 terminates the dialog of the password entry screen 511 (step S124). Then, the controller 10 performs authentication by using the character string corresponding to the entered characters that have been stored one by one in the order of entry in step S122 and determines whether the authentication has succeeded (step S126). In step S126, if the controller 10 determines that the authentication has failed, the controller 10 notifies the user of the authentication failure and the process returns to step S102. If the controller 10 determines NO in step S126 and the entered characters have been stored temporarily in step S122, the controller 10 discards the entered characters. It is noted that even if the authentication fails a predetermined number of times (for example, twice), the user may be allowed to reenter a password, and if the authentication fails a predetermined number of times (for example, three consecutive times), the controller 10 may notify the user of the authentication failure and the process may return to step S102.

In step S126, if the controller 10 determines that the authentication has succeeded, the controller 10 associates the character string, in which the characters have been stored one by one in the order of entry in step S122, with the file that is a candidate to be selected as a print target and is in the public information display state as the password of the file and stores the password in the RAM (step S128). Then, the controller 10 sets the file, the public information of which is being displayed, as a print target file (step S130). Specifically, the controller 10 stores in the RAM that the user has selected the file in the public information display state as a print target file. The controller 10 displays a check mark in the checkbox of the file in the file list section 510a. The file that has been marked with the check mark in its checkbox indicates that the file has been selected as the print target. In step S110, if the controller 10 determines that the file is not an encrypted file that has not been authenticated, that is, the file is a file that is not encrypted or is an authenticated encrypted file, the process proceeds to step S130.

In step S106, if the controller 10 determines that the selection button 510c has not been tapped, the controller 10 determines whether any one of the checkboxes in the file list section 510a has been tapped (step S132). In step S132, if the controller 10 determines that a checkbox has been tapped, the controller 10 determines whether a check mark is displayed in the tapped checkbox (step S134). In step S134, if the controller 10 determines that no checkmark is displayed, the process proceeds to step S110. That is, when the user taps a checkbox that has not been checked with a check mark, a process (in step S110 to S130) similar to the process that is performed when the selection button 510c is tapped while the public information is being displayed is performed. In step S134, if the controller 10 determines that a check mark has been displayed, the controller 10 cancels the setting that the file corresponding to the checkbox is to be set as a print target and clears the check mark in the checkbox (step S136).

In step S132, if the controller 10 determines that no checkbox has been tapped, the controller 10 determines whether the detail button 510d has been tapped (step S138). In step S138, if the controller 10 determines that the detail button 510d has been tapped, the controller 10 determines whether the file public information display section 510b is displaying the public information of a certain file (step S140). If the file public information display section 510b is not displaying any public information, the controller 10 performs the determination in step S140 to disable the detail button 510d. In step S140, if the controller 10 determines that the file public information display section 510b is in the public information display state, the controller 10 determines whether the file, the public information of which is being displayed, is an encrypted file that has not been authenticated (step S142). In step S142, if the controller 10 determines that the file is not an encrypted file that has not been authenticated, that is, the file is not encrypted or was encrypted and has since been authenticated, the process proceeds to step S162. In step S142, if the controller 10 determines that the file is an encrypted file that has not been authenticated, the controller 10 causes the screen 510 to display the password entry screen 511 similarly to the process in step S112 (step S144).

After the password entry screen 511 has been displayed in step S144, the controller 10 determines whether the cancel button 511d has been tapped (step S146). If the controller 10 determines that the cancel button 511d has been tapped, the controller 10 terminates the dialog of the password entry screen 511 (step S148). If the entered characters have been stored temporarily in step S154, which will be described below, in step S148, the controller 10 discards the entered characters. In step S148, after the dialog of the password entry screen 511 has been terminated, the screen 510 is displayed in an active state.

In step S146, if the controller 10 determines that the cancel button 511d has not been tapped, the controller 10 determines whether the OK button 511c has been tapped (step S150). In step S150, if the controller 10 determines that the OK button 511c has not been tapped, the controller 10 determines whether character entry has been performed by using a numeric keypad (not illustrated) (step S152). In step S152, if the controller 10 determines that no character entry has been performed, the process returns to step S146. In step S152, if the controller 10 determines that character entry has been performed, the controller 10 stores the entered characters in the order of entry (step S154), and the process returns to step S146.

In step S150, if the controller 10 determines that the OK button 511c has been tapped, the controller 10 terminates the dialog of the password entry screen 511 (step S156). Then, the controller 10 performs authentication by using the character string of the entered characters, which have been stored one by one in the order of entry in step S154, and determines whether the authentication has succeeded (step S158). In step S158, if the controller 10 determines that the authentication has failed, the controller 10 notifies the user of the authentication failure and the process returns to step S102. If the controller 10 determines NO in step S158 and the entered characters have been stored temporarily in step S154, the controller 10 discards the entered characters. It is noted that, similarly to the case of the NO determination in step S126, even if the authentication fails a predetermined number of times (for example, twice), the user may be allowed to reenter a password, and if the authentication fails a predetermined number of times (for example, three consecutive times), the controller 10 may notify the user of the authentication failure and the process may return to step S102. Although the predetermined number of times may be different from the number of times in the NO determination in step S126, the same number of times is preferable. In step S158, if the controller 10 determines that the authentication has succeeded, the controller 10 associates the character string, in which characters have been stored one by one in the order of entry in step S154, with the file in the public information display state as the password of the file and stores the password in the RAM (step S160). Then, as illustrated in Fig. 4, the controller 10 causes the screen 510 to display the file detail screen 512 that corresponds to the file in the public information displaying state as a pop-up screen (step S162).

As illustrated in Fig. 4, on the file detail screen 512, a preview image 512a of the file and detail information 512b, such as the file name, the number of pages, the file size, and the last modified date and time, are displayed. The preview image 512a is, for example, a preview image of the first page of a detail information display target file. In this embodiment, the process of displaying the file detail screen 512 that includes the preview image 512a corresponds to the "preview process".

In step S162, with respect to the file that is not encrypted, the controller 10 generates the preview image 512a of the first page of the file, and displays the file detail screen 512 that includes the preview image 512a and the detail information 512b. With respect to the encrypted file, the controller 10 decrypts the data of the first page of the file by using the password that has been stored in step S128 or step S160, generates the preview image 512a of the first page and displays the file detail screen 512 that includes the preview image 512a and the detail information 512b.

After step S162, while the file detail screen 512 has been displayed, the controller 10 determines whether the close button 512c has been tapped (step S164), and stands by until the close button 512c has been tapped. If the controller 10 determines that the close button 512c has been tapped, the controller 10 terminates the dialog of the file detail screen 512 (step S166) and the process returns to step S102. In step S166, after the dialog of the file detail screen 512 has been terminated, the screen 510 is displayed in an active state. By performing the above-described processes in step S102 to step S166, the controller 10 and the user I/F section 50 function as the "file selecting section".

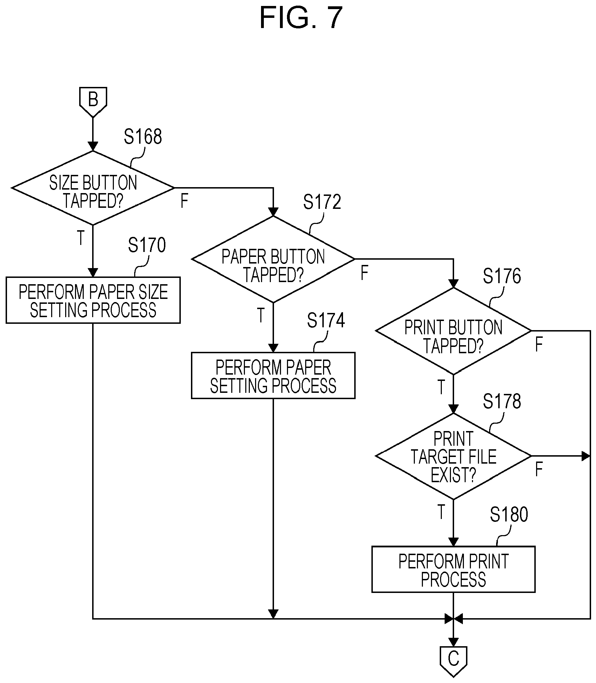

Returning to Fig. 5, in step S138, if the controller 10 determines that the detail button 510d is not tapped, or in step S140, if the controller 10 determines that the public information is not displayed, as illustrated in Fig. 7, the controller 10 determines whether the size button 510e has been tapped (step S168). In step S168, if the controller 10 determines that the size button 510e has been tapped, the controller 10 performs a process for setting the paper size (step S170), and the process returns to step S102. The process for setting the paper size includes, for example, causing the screen 510 to display a size setting screen as a pop-up screen (not illustrated), receiving the setting content corresponding to a size setting operation, and terminating the display of the size setting screen.

In step S168, if the controller 10 determines that the size button 510e has not been tapped, the controller 10 determines whether the paper button 510f has been tapped (step S172). In step S172, if the controller 10 determines that the paper button 510f has been tapped, the controller 10 performs a process for setting paper (step S174), and the process returns to step S102. The process for setting paper includes, for example, causing the screen 510 to display a paper setting screen as a pop-up screen (not illustrated), receiving the setting content corresponding to a paper setting operation, and terminating the display of the paper setting screen.

In step S172, if the controller 10 determines that the paper button 510f has not been tapped, the controller 10 determines whether the print button 510g has been tapped (step S176). In step S176, if the controller 10 determines that the print button 510g has been tapped, the controller 10 determines whether a file has been selected as a print target (step S178). The file that has been selected as a print target is a file that is marked with the check mark in its checkbox in the file list section 510a. In step S178, if the controller 10 determines that no file has been selected as a print target, the print button 510g is invalid, and the process returns to step S102. In step S178, if the controller 10 determines that a file has been selected as a print target, the controller 10 performs a print process (step S180). If a plurality of files are specified as print targets, in step S180, the print processes for the files are sequentially performed on each file. The print processes include the process of reading a file from a removable storage device, the process of generating print data from the file, and the process of executing the printing based on the print data by using the print section 20 to produce a print product. If the files that have been selected as the print targets include an encrypted file, during the process of generating the print data from the encrypted file, the encrypted portion of the encrypted file is decrypted by using the password corresponding to the file, the password being stored in step S128 or S160, and print data is generated based on the decrypted data in a format acceptable in the print section 20. After the print section 20 has completed the print process, the controller 10 discards the stored password corresponding to the file. If the color print button 510g2 has been tapped, print data that corresponds to color printing is generated, whereas if the black and white print button 510g1 has been tapped, print data that corresponds to black and white printing is generated.

The controller 10 and the print section 20 function as the "first processing section" while the processes in step S112 to S130 and step S180 are performed. The controller 10 and the print section 20 also function as the "first processing section" while the processes in step S144 to S166 are performed, the NO determination is made in step S110, the process in step S130 is performed, and the process in step S180 is performed. The controller 10 and the print section 20 function as the "second processing section" after the NO determination is made in step S110, in which it is determined that the file is not an encrypted file, the process in step S130 is performed and the process in step S180 is performed. The "first processing section" and the "second processing section" may be simply collectively referred to as the "processing section". The controller 10 and the user I/F section 50 function as the "authentication information acquiring section" while the processes in step S112 to S128 or processes in step S144 to S160 are performed. As described above, in response to a selection of an encrypted file, the controller 10 according to the embodiment requests the user to enter a password and acquires the password, performs authentication by using the password, receives an instruction for starting printing on one or more files including the encrypted file, and performs the printing without requesting the user to reenter the password for the authenticated encrypted file.

Although the password is used to decrypt the encrypted data in the print processing in step S180, in this embodiment, the password that has been stored in the RAM when the encrypted file is selected as the print target or when the encrypted file is selected so as to display the details of the file (step S128 or step S160) is used, and consequently, it is not necessary to request the user to reenter the password when the printing of the encrypted file is started. In known techniques, in order to select a plurality of files as print targets and issue an instruction to collectively print the files, the user is requested to enter the password of each encrypted file each time the printing of the encrypted file is started. After operating the print button, the user has to keep on waiting in front of the printer 1 paying attention to the password entry screen to appear until the password entry of the last encrypted file ends. In another case, for example, if a user talks with someone for a long time in front of the printer 1 and is not paying attention to the display content on the touch panel 51 of the printer 1, the print process is delayed until the password is entered. According to this embodiment, however, once a user enters a password that corresponds to an encrypted file when the user selects the file or when the user requests to display the detail information of the file, the user is free from paying attention to the touch panel 51 of the printer 1 after tapping the print button 510g. Furthermore, according to this embodiment, even if the user leaves the printer 1, the user is not requested to enter the password after tapping the print button 510g, and it can be prevented that the print process is delayed until the user enters the password. Consequently, for example, the user can do another work at a location away from the printer 1 while the print process in the printer 1 is being processed, and the convenience can be increased accordingly.

In this embodiment, each time an encrypted file is selected as a print target, the user is requested to enter a password by the processes in step S106 to S134. That is, when an encrypted file is selected, before the next another file is selected, the password entry screen 511 for the encrypted file is displayed to request the user to enter the password, and until the password is acquired in response to a pressing operation of the OK button 511c or the password entry is canceled by the user with the cancel button 511d, the selection of the next another file is forbidden. Accordingly, the file selection and the password entry are sequentially performed; the user can intuitively understand the correspondence relation between the selected file and the file for which the password entry is requested. It is noted that the "another file" to be selected after an encrypted file has been selected by a user may be an encrypted file or a file that is not encrypted.

Furthermore, the password that has been acquired when the "preview process" is performed, that is, when the display process of the file detail screen 512 is performed, is stored until the print process of the file is performed. Consequently, the user is not requested to reenter the password when selecting the file as the print target. Accordingly, the work of the user can be reduced compared with the case where after the file detail screen 512 has been displayed, the user selects the file as a print target, and the user is requested to reenter the password. Furthermore, the user is not requested to reenter the password when the file detail screen 512 is displayed for an encrypted file that has been selected as a print target, and the work of the user can be reduced accordingly.

After an encrypted file that has not been authenticated is selected and its password authentication succeeds, if the user cancels the selection and selects again the file as a print target, in this embodiment, in the second authentication and subsequent authentication, it is considered that the file has been authenticated, and the user is not requested to enter the password; however, the password that has been associated with the file and stored may be discarded when the selection of the encrypted file as the print target is canceled. In such a case, the user is requested to reenter the password when selecting again the file as a print target. In this embodiment, when the file detail screen 512 is displayed for an encrypted file that is not selected as a print target, the entered password is stored in the RAM (see step S160); alternatively, the password may not be stored when the file detail screen 512 is displayed, that is, the process in step S160 may be omitted.

The password that has been associated with an encrypted file and stored in the RAM is discarded, for example, when the print process in step S180 is complete, the removable storage device print function is complete (the display of the screen 510 is terminated), no operation has been made to the printer 1 for a predetermined time period, the power of the printer 1 is turned off, or the removable storage device is removed from the printer 1. Furthermore, the controller 10 may discard the password stored in the RAM when an error other than minor errors such as running out of paper and running out of ink occurs during a print process. By discarding the password that has been stored in the RAM at the above-mentioned timing, the user is requested to reenter the password when the encrypted file is selected next as a print target. As a result, the encrypted file can be prevented from being printed by someone other than the valid user. In a case of a minor error such as running out of paper or ink, however, it is preferable that the user deal with the problem on the spot, for example, by supplying paper or replacing the ink cartridge such that the printing can be immediately resumed. Consequently, in a case of a minor error, the controller 10 stores the password without discarding it. Furthermore, the controller 10 may determine whether to discard the password or not depending on the condition at the occurrence of the error. Specifically, for example, the password may be discarded when an error occurs during print processing according the above-described removable storage device print function. Alternatively, for example, the password may be stored when an interruption print request is issued from an external PC while a user is operating in the removable storage device print function and an error occurs during the print processing for the PC.

### 2. Second embodiment

In the first embodiment, a user is requested to enter a password each time an encrypted file is selected as a print target. Alternatively, after a plurality of files have been selected as targets of the "process", when collective instructions for performing the "process" on the files are issued, the user may be requested to enter the passwords. In the second embodiment, the "process" may be, for example, a print process or a preview process.

The print process will be specifically described as an example "process". After a user has selected a plurality of files including an encrypted file as print targets, when the controller 10 receives collective instructions for executing printing in response to a tapping operation of the print button 510g by the user, the controller 10 displays the password entry screen 511 that corresponds to the encrypted file included in the files and requests the user to enter the password. If the files include a plurality of encrypted files, for example, the password entry screen 511 is displayed for each file one by one to request the user to enter each password. The password entry screen 511 may be a screen that requests the user to enter all these passwords corresponding to all these encrypted files on one screen.

It is noted that after the password entry screen 511 for the first encrypted file is displayed to request the user to enter the password and before the user enters the password and taps the OK button 511c, that is, while entering the password, the print process of a file that is not encrypted among the print target files may be started prior to the print process of the encrypted file for which password authentication has not been complete. In such a case, the password of the first encrypted file is entered while the print process of the file that is not encrypted is being performed. Consequently, the time necessary to print the print target files can be reduced compared with the case where the print process of all files is stopped until the password authentication of the encrypted file is complete.

The preview process will be specifically described as an example "process". After the user selects a plurality of files as preview targets, for example, a file A, a file B, and a file C, in response to reception of collective instructions for starting previewing of the files, the controller 10 determines whether the selected preview target files include an encrypted file. If the file A and the file C that are encrypted files, after the reception of the collective instructions for starting previewing and before staring the preview process, the user is immediately requested to enter the password of the first encrypted file A. After the password entry for the encrypted file A is requested and before the user completes the password entry of the encrypted file A, the preview process of the file B, which is not encrypted among the preview target files, may be started prior to the preview process of the encrypted file A. While the preview process of the file B is being performed, in response to the entry of the password of the encrypted file A, the password entry of the encrypted file C may be requested and the password of the encrypted file C may be received. In such a case, after the password of the encrypted file C is entered and the preview process of the file B is complete, without additional password entry, the preview process of the encrypted file A can be performed, and after the preview process of the encrypted file A is complete, the preview process of the encrypted file C can be performed.

### 3. Other embodiments

It is to be understood that the technical scope of the present invention is not limited to the above-described embodiments, and various modifications can be made. For example, in the first embodiment, the file that requires authentication is an encrypted file that requires entry of a password to perform the print process as the "process" and the preview process that is performed prior to the "process". Alternatively, the "process" may be various processes to be performed on files by the processing apparatus in accordance with an instruction from a user. For example, the processes may include a FAX transmission process, or a batch process that is automatically performed by the processing apparatus in accordance with an instruction from a user. The processes may also include a print data generation process for printing. The file that requires authentication may be a file that requires authentication to perform the preview process as the "process". Specifically, for example, while a user is using a viewer application and the user selects a plurality of files as preview targets and instructs collective preview start instructions, when the user selects an encrypted file as a preview target, the user may be requested to enter a password. The term "authentication" is not limited to the authentication to be performed on an encrypted file. For example, the term "authentication" may include verifying an access right to a file that is not encrypted and to which the access right has been set.

A processing apparatus according to an aspect of the present invention may include a processing section configured to collectively perform processes of a plurality of files, an authentication section configured to request entry of authentication information that is necessary for authentication of an authentication-required file when the authentication section receives a selection of the authentication-required file to be processed by the processing section and performs the authentication by using the entered authentication information, and a process control section configured to store the authentication information for the authentication-required file until the process of the authentication-required file is processed by the processing section and cause the processing section to perform the process of the authentication-required file by using the stored authentication information without causing again the authentication section to request the authentication information.

The process "to request entry of authentication information that is necessary for authentication of an authentication-required file when the authentication section receives a selection of the authentication-required file to be processed" in the "authentication section" may be, for example, to request entry of authentication information each time a selection of each authentication-required file to be processed is received, that is, before receiving an instruction for starting the process for the file selected as the process target (this process corresponds to the processes in step S112 to S130 in the first embodiment). Alternatively, the process "to request entry of authentication information that is necessary for authentication of an authentication-required file when the authentication section receives a selection of the authentication-required file to be processed" in the authentication section may be, for example, after receiving selections of a plurality of files including at least one authentication-required file, in response to receiving collective instructions for starting the processes to the files, to request entry of the authentication information for the authentication-required file among the files (this process corresponds to the second embodiment). As described above, in both the first embodiment and the second embodiment, the authentication information is not requested again when the "process" is performed on each file, and consequently, the convenience can be increased. In this embodiment, the "processing unit" corresponds to the controller 10 and the print section 20, and the "authentication section" and the "process control section" correspond to the controller 10. Although the entry of authentication information is requested by using the screen display, the request may be performed by playing back a voice, for example, "Please enter the password", or may be performed by blinking a light-emitting diode (LED).

In the above-described embodiments, the "authentication information" is a password for decrypting an encrypted file. Alternatively, the "authentication information" may be a user ID and a password. The "authentication information" may be data that is used for biometric authentication, for example, data acquired from a living body. With respect to the second file and subsequent files, authentication may be performed by using authentication information that has already been acquired (for example, authentication information that has been acquired for the authentication of the first file and subsequent files), and if the authentication succeeds, the authentication information may be stored as the authentication information for the files, and if the authentication fails, the user may be requested to enter authentication information. In such a case, it is preferable that all the authentication information be discarded, for example, when the print processes of all files are complete, the removable storage device print function is complete (the display of the screen 510 is complete), no operation has been made to the printer 1 for a predetermined time period, the power of the printer 1 is turned off, or the removable storage device is removed from the printer 1.

The functions of the components described in Claims are implemented by hardware resources of which the functions are specified by the configurations, hardware resources of which the functions are specified by programs, or by combinations thereof. Further, the functions of the components are not limited to those implemented by physically independent hardware resources. Further, a single function may be implemented by physically independent hardware resources.

## Claims

1. A processing apparatus (1) comprising:
a file selecting section (10, 50) configured to receive selections of a plurality of files;
a first processing section (10, 20) configured to perform authentication by applying authentication information to an authentication-required file that requires authentication for a process to be performed and configured to perform the process;
a second processing section (10, 20) configured to perform the process on a no authentication-required file that does not require authentication for the process to be performed; and
an authentication information acquiring section (10, 50) configured to request entry of the authentication information for the authentication-required file and acquire the authentication information,
wherein after the selections of the files are received, in response to reception of collective instructions from a user for starting the processes with respect to the files, the authentication information acquiring section requests the user to enter the authentication information corresponding to the authentication-required file among the files, and
**characterized in that** after the authentication information acquiring section requests entry of the authentication information corresponding to the authentication-required file and before acquiring the authentication information, the second processing section performs the process prior to the processing performed by the first processing section.

2. The processing apparatus according to Claim 1, further comprising: a print mechanism (20), wherein the process is performed by using the print mechanism.

3. The processing apparatus according to Claim 1, wherein the process is a preview process.

4. The processing apparatus according to Claim 1, wherein the authentication information acquiring section determines whether authentication of the authentication-required file can be performed by using authentication information that has already been acquired, and if the authentication information acquiring section determines that the authentication cannot be performed, requests entry of the authentication information for the authentication-required file, and if the authentication information acquiring section determines that the authentication can be performed, does not request entry of the authentication information for the authentication-required file.

5. A control program comprising instructions, which when executed on a processing apparatus, causes the processing apparatus to implement functions, the functions comprising:
a file selecting function for receiving selections of a plurality of files;
a first processing function for performing authentication by applying authentication information to an authentication-required file that requires authentication for a process to be performed and for performing the process;
a second processing function for performing the process on a no authentication-required file that does not require authentication for the process to be performed; and
an authentication information acquiring function for requesting entry of the authentication information for the authentication-required file and acquiring the authentication information,
wherein after the selections of the files are received, in response to reception of collective instructions from a user for starting the processes with respect to the files, the authentication information acquiring function requests the user to enter the authentication information corresponding to the authentication-required file among the files, and
**characterized in that** after the authentication information acquiring function requests entry of the authentication information corresponding to the authentication-required file and before acquiring the authentication information, the second processing function performs the process prior to the processing performed by the first processing function.

## Patentansprüche

1. Verarbeitungsvorrichtung (1), umfassend:
einen Dateiauswahlabschnitt (10, 50), der konfiguriert ist, Auswahlen mehrerer Dateien zu empfangen;
einen ersten Verarbeitungsabschnitt (10, 20), der konfiguriert ist, Authentifizierung durch Anwenden von Authentifizierungsinformationen bei einer Datei mit benötigter Authentifizierung durchzuführen, die Authentifizierung für einen durchzuführenden Prozess benötigt und konfiguriert ist, den Prozess durchzuführen;
einen zweiten Verarbeitungsabschnitt (10, 20), der konfiguriert ist, den Prozess auf einer Datei ohne benötigte Authentifizierung durchzuführen, die keine Authentifizierung für den durchzuführenden Prozess benötigt; und
einen Authentifizierungsinformationen-Erlangungsabschnitt (10, 50), der konfiguriert ist, Eingabe der Authentifizierungsinformationen für die Datei mit benötigter Authentifizierung zu verlangen und die Authentifizierungsinformationen zu erlangen,
wobei, nachdem die Auswahlen der Dateien empfangen worden sind, in Antwort auf Empfang kollektiver Anweisungen von einem Benutzer zum Starten der Prozesse in Bezug auf die Dateien der Authentifizierungsinformationen-Erlangungsabschnitt den Benutzer auffordert, die Authentifizierungsinformationen entsprechend der Datei mit benötigter Authentifizierung unter den Dateien einzugeben, und
**dadurch gekennzeichnet, dass**, nachdem der Authentifizierungsinformationen-Erlangungsabschnitt Eingabe der Authentifizierungsinformationen entsprechend der Datei mit benötigter Authentifizierung verlangt hat und vor Erlangen der Authentifizierungsinformationen der zweite Verarbeitungsabschnitt den Prozess vor der Verarbeitung durchführt, die durch den ersten Verarbeitungsabschnitt durchgeführt wird.

2. Verarbeitungsvorrichtung nach Anspruch 1, weiter umfassend: einen Druckmechanismus (20),
wobei der Prozess unter Verwendung des Druckmechanismus durchgeführt wird.

3. Verarbeitungsvorrichtung nach Anspruch 1, wobei der Prozess ein Vorschauprozess ist.

4. Verarbeitungsvorrichtung nach Anspruch 1, wobei der Authentifizierungsinformationen-Erlangungsabschnitt bestimmt, ob Authentifizierung der Datei mit benötigter Authentifizierung unter Verwendung der bereits erlangten Authentifizierungsinformationen durchgeführt werden kann, und wenn der Authentifizierungsinformationen-Erlangungsabschnitt bestimmt, dass die Authentifizierung nicht durchgeführt werden kann, Eingabe der Authentifizierungsinformationen für die Datei mit benötigter Authentifizierung verlangt, und wenn der Authentifizierungsinformationen-Erlangungsabschnitt bestimmt, dass die Authentifizierung durchgeführt werden kann, keine Eingabe der Authentifizierungsinformationen für die Datei mit benötigter Authentifizierung verlangt.

5. Steuerprogramm, umfassend Anweisungen, die, wenn auf einer Verarbeitungsvorrichtung ausgeführt, die Verarbeitungsvorrichtung veranlassen, Funktionen zu implementieren, wobei die Funktionen umfassen:
eine Dateiauswahlfunktion zum Empfangen Auswahlen mehrerer Dateien;
eine erste Verarbeitungsfunktion zum Durchführen einer Authentifizierung durch Anwenden von Authentifizierungsinformationen bei einer Datei mit benötigter Authentifizierung, die Authentifizierung für einen durchzuführenden Prozess benötigt, und zum Durchführen des Prozesses;
eine zweite Verarbeitungsfunktion zum Durchführen des Prozesses auf einer Datei ohne benötigte Authentifizierung, die keine Authentifizierung für den durchzuführenden Prozess benötigt; und
eine Authentifizierungsinformationen-Erlangungsfunktion zum Verlangen einer Eingabe der Authentifizierungsinformationen für die Datei mit benötigter Authentifizierung und Erlangen der Authentifizierungsinformationen,
wobei, nachdem die Auswahlen der Dateien empfangen worden sind, in Antwort auf Empfang kollektiver Anweisungen von einem Benutzer zum Starten der Prozesse in Bezug auf die Dateien die Authentifizierungsinformationen-Erlangungsfunktion den Benutzer auffordert, die Authentifizierungsinformationen entsprechend der Datei mit benötigter Authentifizierung unter den Dateien einzugeben, und
**dadurch gekennzeichnet, dass**, nachdem die Authentifizierungsinformationen-Erlangungsfunktion Eingabe der Authentifizierungsinformationen entsprechend der Datei mit benötigter Authentifizierung verlangt hat und vor Erlangen der Authentifizierungsinformationen die zweite Verarbeitungsfunktion den Prozess vor der Verarbeitung durchführt, die durch die erste Verarbeitungsfunktion durchgeführt wird.

## Revendications

1. Appareil de traitement (1) comprenant :
une section de sélection de fichiers (10, 50) configurée pour recevoir des sélections d'une pluralité de fichiers ;
une première section de traitement (10, 20) configurée pour réaliser l'authentification en appliquant de l'information d'authentification à un fichier nécessitant une authentification qui nécessite l'authentification pour un traitement à réaliser, et configurée pour réaliser le traitement ;
une deuxième section de traitement (10, 20) configurée pour réaliser le traitement pour un fichier ne nécessitant pas de traitement qui ne nécessite pas de traitement pour le traitement à réaliser ; et
une section d'acquisition d'information d'authentification (10, 50) configurée pour demander l'entrée de l'information d'authentification pour le fichier nécessitant une authentification et acquérir l'information d'authentification,
dans lequel, une fois que les sélections des fichiers sont reçues, en réponse à la réception d'instructions collectives d'un utilisateur pour lancer les traitements par rapport aux fichiers, la section d'acquisition d'information d'authentification demande à l'utilisateur d'entrer l'information d'authentification correspondant au fichier nécessitant une authentification parmi les fichiers, et
**caractérisé en ce qu'**après la demande, par la section d'acquisition d'information d'authentification, d'entrer l'information d'authentification correspondant au fichier nécessitant une authentification et avant l'acquisition de l'information d'authentification, la deuxième section de traitement effectue le traitement avant le traitement réalisé par la première section de traitement.

2. Appareil de traitement selon la revendication 1, comprenant en outre : un mécanisme d'impression (20),
dans lequel le traitement est réalisé en utilisant le mécanisme d'impression.

3. Appareil de traitement selon la revendication 1, dans lequel le traitement est un traitement de prévisualisation.

4. Appareil de traitement selon la revendication 1, dans lequel la section d'acquisition d'information d'authentification détermine si l'authentification du fichier nécessitant une authentification peut être réalisée en utilisant l'information d'authentification qui a déjà été acquise, et si la section d'acquisition d'information d'authentification détermine que l'authentification ne peut pas être réalisée, demande l'entrée de l'information d'authentification pour le fichier nécessitant l'authentification, et si la section d'acquisition d'information d'authentification détermine que l'authentification peut être réalisée, ne demande pas l'entrée de l'information d'authentification pour le fichier nécessitant l'authentification.

5. Programme de commande comprenant des instructions lequel, lorsque exécuté sur un appareil de traitement, fait en sorte que l'appareil de traitement implémente des fonctions, les fonctions comprenant :
une fonction de sélection de fichiers pour recevoir des sélections d'une pluralité de fichiers ;
une première fonction de traitement pour réaliser l'authentification en appliquant l'information d'authentification à un fichier nécessitant une authentification qui nécessite l'authentification pour un traitement à réaliser, et pour effectuer le traitement ;
une deuxième fonction de traitement pour réaliser le traitement pour un fichier ne nécessitant pas d'authentification qui ne nécessite pas l'authentification pour le traitement à réaliser ; et
une fonction d'acquisition d'information d'authentification pour demander l'entrée de l'information d'authentification pour le fichier nécessitant l'authentification et acquérir l'information d'authentification,
dans lequel, une fois que les sélections des fichiers sont reçues, en réponse à la réception d'instructions collectives d'un utilisateur pour lancer les traitements par rapports aux fichiers, la fonction d'acquisition d'information d'authentification demande à l'utilisateur d'entrer l'information d'authentification correspondant au fichier nécessitant l'authentification parmi les fichiers, et
**caractérisé en ce que**, après la demande par la fonction d'acquisition d'information d'authentification de l'entrée de l'information d'authentification correspondant au fichier nécessitant l'authentification et avant l'acquisition de l'information d'authentification, la deuxième fonction de traitement réalise le traitement avant le traitement réalisé par la première fonction de traitement.
